# EUROPÄISCHE PATENTANMELDUNG

(11) **EP 2 204 548 A1**
(43) Veröffentlichungstag der Anmeldung: **07.07.2010**
(21) Anmeldenummer: 09150103.1
(22) Anmeldetag: 06.01.2009
(51) Int. Cl.: F01D 11/12, F16J 15/32

(54) **Abgasturbine mit Abdeckring und entsprechender Abgasturbolader**

(71) Anmelder: ABB Turbo Systems AG, 5400 Baden (CH)
(72) Erfinder: Gizzi, William, 8047 Zürich (CH)
(74) Vertreter: ABB Patent Attorneys

(57) **Zusammenfassung**

Der Abdeckring radial ausserhalb der Laufschaufeln (12) des Turbinenrades (10) ist als eine Metallbürste mit Borsten (51) ausgebildet.

Bei einer Berührung zwischen den Schaufelspitzen und den Borsten (51) der Bürste kommt es zu keiner Materialabtragung am Abdeckring oder an den Laufschaufeln, da sich die Borsten in Laufrichtung der Laufschaufeln biegen können.

## Beschreibung

### Technisches Gebiet

Die Erfindung bezieht sich auf das Gebiet der Abgasturbolader für aufgeladene Brennkraftmaschinen.

Sie betrifft die Abgasturbine eines Abgasturboladers, wobei die Abgasturbine ein Turbinenrad mit Laufschaufeln und einen die Laufschaufeln radial umgebenden Abdeckring umfasst.

### Stand der Technik

Abgasturbolader werden zur Leistungssteigerung von Brennkraftmaschinen, insbesondere Hubkolbenmotoren, eingesetzt. Dabei besitzt ein Abgasturbolader üblicherweise einen Radialverdichter und eine Radial- oder Axialturbine. Ab einer bestimmten Grösse ist es sinnvoll Axialturbinen für den Antrieb des Verdichters einzusetzen. Damit das Abgas die Laufschaufeln der Axialturbine nicht umgehen kann, werden diese von einem Gehäuseteil radial aussen umschlossen. Dieses Gehäuseteil begrenzt somit im Bereich der Laufschaufeln den Strömungskanal radial nach Aussen. Dieses Gehäuseteil, allgemein als Abdeckring bezeichnet, kann als integraler Bestandteil eines stromab der Laufschaufeln angeordneten Diffusors, als integraler Bestandteil einer radial äusseren Gehäusewand eines stromauf der Laufschaufeln angeordneten Düsenrings oder als separates Bauteil ausgebildet sein.

Je nach verwendetem Treibstoff, vor allem bei Schweröl (Heavy Fuel Oil, HFO), ist das Abgas stark mit Russ, Asche und anderen Schadstoffen verschmutzt. Diese lagern sich mit der Zeit auf gewissen Bauteilen der Abgasturbine, insbesondere auf den Laufschaufeln, dem Abdeckring, den Leitschaufeln des Düsenrings sowie dem Diffusor, ab und mindern den Wirkungsgrad der Abgasturbine, was insgesamt die Leistung der Brennkraftmaschine reduziert. Aus diesem Grund müssen die verschmutzten Bauteile der Abgasturbine in regelmässigen Abständen gereinigt werden. Üblicherweise wird die Abgasturbine mit Wasser gewaschen. Um die Belastungen für die verschmutzten Bauteil gering zu halten, wird von Turboladerherstellern vorgeschrieben, die Last der Brennkraftmaschine während des Waschvorgangs zu reduzieren. Dadurch wird die Temperatur der betroffenen Bauteile schon vor dem Waschvorgang etwas reduziert was zu kleineren Belastungen führt.

Da die Betreiber der Brennkraftmaschinen in der Regel nicht gerillt sind die Last der Brennkraftmaschine während des Reinigungsvorgangs zu reduzieren, triff das kühle Wasser auf die sehr heissen Bauteile. Da das Turbinenrad eine massive Scheibe jedoch der Abdeckring im Vergleich dazu nur ein dünnes Rohr ist, kühlt der Abdeckring viel schneller ab als das Turbinenrad. Das führt dazu, dass sich dieser schneller in radialer Richtung zusammenzieht. Aufgrund der engen Toleranzen zwischen den radial äussersten Spitzen der Laufschaufeln des Turbinenrades und dem angrenzenden Abdeckring kommt es deshalb häufig vor, dass die Laufschaufeln des Turbinenrades während des Waschvorgangs am Abdeckring streifen. Dies führt zu Abnutzung sowohl am Abdeckring als auch an den Spitzen der Laufschaufeln, was wiederum den Wirkungsgrad der Turbine mindert und insgesamt die Leistung der Brennkraftmaschine reduziert.

Die CH 35 11 42 offenbart eine Axialturbine mit einem Turbinenrad mit Laufschaufeln und einem die Laufschaufeln radial umgebenden Abdeckring, wobei der Abdeckring in mehrere voneinander getrennte Segmente unterteilt ist.

Die EP 1 895 107 A1 offenbart einen Abdeckring radial ausserhalb der Laufschaufeln des Turbinenrades, welcher ebenfalls durch Schlitze in mehrere, in Umfangsrichtung voneinander getrennte Ringsegmente aufgeteilt ist. Die Schlitze zwischen den Segmenten weisen zwischen der Innenseite und der Aussenseite einen von der Radialen abweichenden Verlauf auf. Der Abdeckring verliert dadurch seinen tangentialen Zusammenhang. Damit zieht sich der Abdeckring bei einer schlagartigen Abkühlung, wie sie beim Turbinenwaschen vorkommt, nicht mehr in radialer Richtung zusammen. Dadurch soll ein Streifen der Laufschaufeln an dem Abdeckring nach reduziert werden.

Eine andere Möglichkeit zum Schutz der Laufschaufelspitzen bei Verunreinigungen besteht gemäss EP 1 820 938 A1 darin, diese mit einer abrasiven Schicht zu beschichteten. Diese beschichteten Laufschaufelspitzen reiben die an der radialen Innenseite des Gehäuses der Abgasturbine angelagerte Verschmutzung ab.

Obwohl die vorgeschlagenen Lösungen teilweise ansprechende Wirkung zeigen, gibt es für unter Volllast zu reinigende Abgasturbinen weiterhin Verbesserungspotential.

### Kurze Darstellung der Erfindung

In diesem Sinne besteht die Aufgabe der vorliegenden Erfindung darin, eine Abgasturbine eines Abgasturboladers weiter zu verbessern, damit sie Reinigungsvorgängen unter Volllast ohne Abnutzungserscheinungen an den Bauteilen der Abgasturbine standhält.

Dies wird erfindungsgemäss erreicht, indem der Abdeckring radial ausserhalb der Laufschaufeln des Turbinenrades als Bürste mit einem Tragring und einer Vielzahl von freistehenden Borsten ausgebildet ist.

Die Bürste ist vorteilhafterweise aus Metall gefertigt. Die Borsten können als Einzeldrähte - pro Borste jeweils ein dünnes, langes, biegsames Stück Metall mit kreisförmigem, flachem, vierkantigem oder anders profiliertem Querschnitt - oder aber als verdrillte Litzen - pro Borste jeweils mehrere Einzeldrähte verdrillt - gefertigt sein.

Die Bürste als Abdeckring hat den Vorteil, dass bei einer Berührung zwischen den Schaufelspitzen und den Borsten es zu keiner Materialabtragung am Abdeckring oder an den Laufschaufeln kommt, da sich die Borsten in Laufrichtung der Laufschaufeln biegen können.

Dies ist insbesondere auch beim Reinigungsvorgang unter Volllast von Vorteil, da ein ungleichmässiges Verziehen des Bürsten-Abdeckrings nicht zu gefährlichen Berührungen zwischen den schnell rotierenden Laufschaufelspitzen und feststehenden Gehäuseteilen führt.

Optional können die Borsten in radialer Richtung oder in Abweichung zur radialen Richtung leicht in Drehrichtung der Laufschaufeln geneigt ausgerichtet sein.

Weitere Vorteile ergeben sich aus den abhängigen Ansprüchen.

### Kurze Beschreibung der Zeichnungen

Folgend sind anhand der Zeichnungen Ausführungsformen des Abgasturboladers mit erfindungsgemäss ausgeführten Turbinenabdeckringen beschrieben. Hierbei zeigt
- Fig. 1: ein Schnittbild einer Abgasturbine gemäss dem Stand der Technik, mit einem im Diffusor integrierten Abdeckring über den Laufschaufeln der Turbine,
- Fig. 2: ein Schnittbild einer Abgasturbine mit einem erfindungsgemäss als Bürste ausgebildeten Abdeckring,
- Fig. 3: eine schematische Darstellung eines Schnittes senkrecht zur Turbinenachse mit schräg zur radialen Richtung ausgerichteten Borsten der Bürste,
- Fig. 4: eine schematische Darstellung eines Schnitts durch die Bürste mit einer ersten Ausführungsform der Borsten der Bürste, und
- Fig. 5: eine schematische Darstellung eines Schnitts durch die Bürste mit einer zweiten Ausführungsform der Borsten der Bürste.

### Weg zur Ausführung der Erfindung

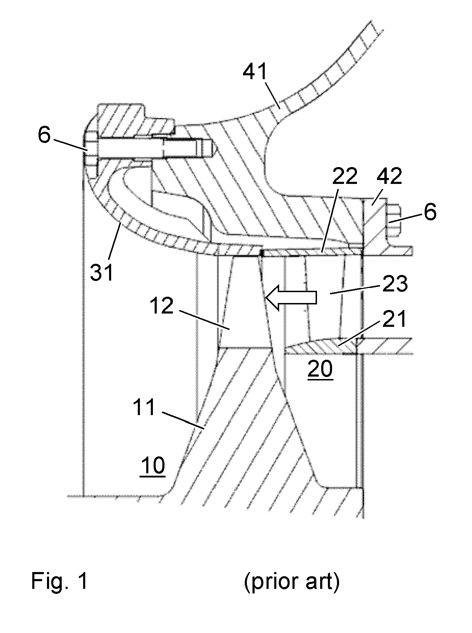

Fig. 1 zeigt einen Schnitt durch die Achse einer Axialturbine eines Abgasturboladers gemäss dem Stand der Technik. Das drehbar in einem Gehäuse gelagerte Turbinenrad 10 umfasst eine Nabe 11 und darauf angeordnet eine Vielzahl von Laufschaufeln 12. Die für den Antrieb der Turbine benötigte Abgasströmung wird durch einen Strömungskanal vom Gaseintrittsgehäuse 42 über den Düsenring 20 auf die Laufschaufeln des Turbinenrades und weiter über den Diffusor 31 zum Gasaustrittsgehäuse 41 geführt. Der Düsenring 20 umfasst eine Innenwand 21 und eine Außenwand 22 sowie dazwischen angeordnete Leitschaufeln 23. Die Wände des Düsenrings wie auch der Diffusor sind Gehäuseteile, welche den Strömungskanal des Abgases begrenzen.

Damit das Abgas den Laufschaufeln des Turbinenrades nicht ausweichen kann, wird der Strömungskanal im Bereich der Laufschaufeln von einem die Laufschaufeln radial umschliessenden Abdeckring begrenzt. Dieses Gehäuseteil kann, wie in der Fig. 1, als integraler Bestandteil des stromab der Laufschaufeln angeordneten Diffusors 31 ausgebildet sein. Alternativ kann der Abdeckring als integraler Bestandteil der radial äusseren Gehäusewand 22 des Düsenrings oder als eigenständiges Bauteil ausgebildet sein.

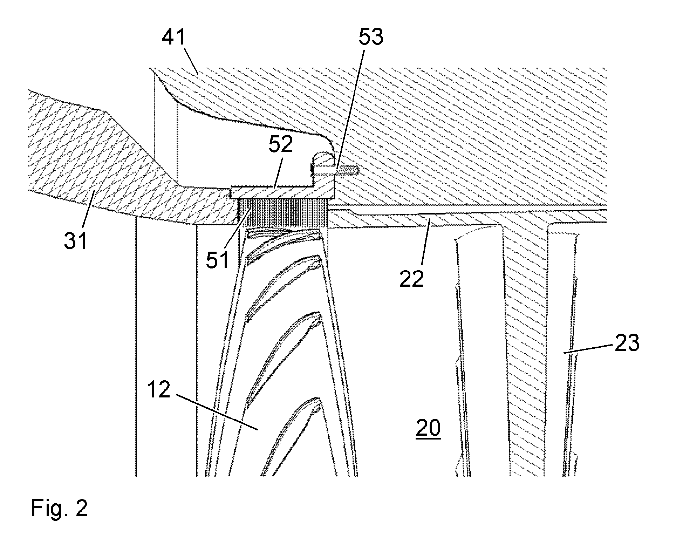

Fig. 2 zeigt einen Schnitt durch die Achse einer Axialturbine eines Abgasturboladers mit einem erfindungsgemäss als Bürste ausgebildeten Abdeckring, welcher den Strömungskanal im Bereich radial ausserhalb der Laufschaufeln 12 des Turbinenrades begrenzt.

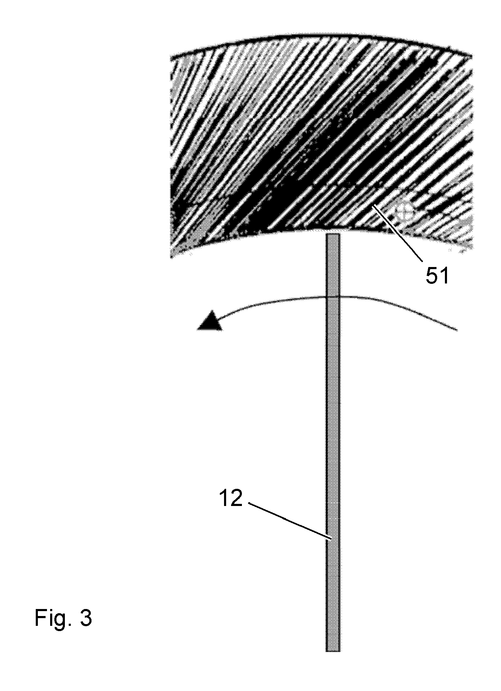

Der erfindungsgemäss als Bürste ausgebildete Abdeckring besteht aus einem umlaufenden äusseren Ring 52, welcher form- oder kraftschlüssig, beispielsweise wie dargestellt mittels Befestigungsmitteln 53, am Gehäuse 41 befestigt sein kann. Der Ring 52 trägt gegen radial Innen eine Vielzahl von Borsten 51, welche eng zusammengefügt eine flexible Abdeckung des Strömungskanals ergeben. Die Borsten 51 können streng radial ausgerichtet sein oder aber in Abweichung zur radialen Richtung mit einer Neigung in die Richtung der rotierenden Laufschaufeln versehen sein, wie dies schematisch in Fig. 3 angedeutet ist.

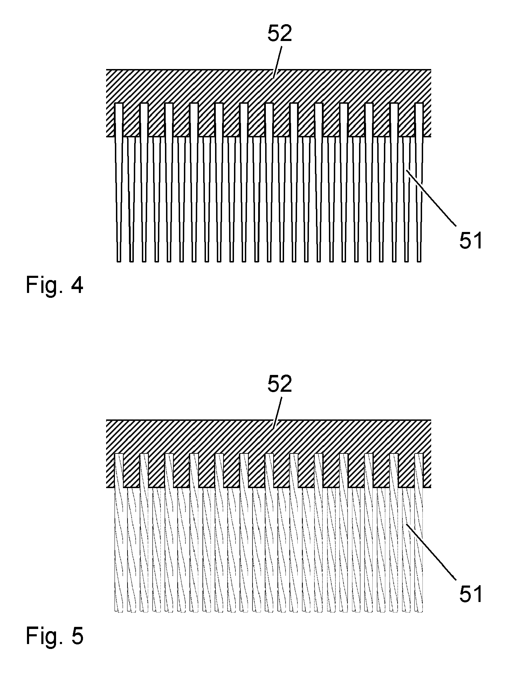

Der Tragring 52 sowie die Borsten 51 der Bürste sind vorteilhafterweise aus Metall gefertigt. Die Borsten können, wie in der Ausführung nach Fig. 4, als dünne, unverdrillte Einzeldrähte ausgebildet sein. Alternativ können, wie in der Ausführung nach Fig. 5, pro Borste jeweils mehrere Einzeldrähte zu einer Litze verdrillt sein.

Die einzelnen Borsten können gleich lang oder unterschiedlich lang ausgebildet sein. Insbesondere können die Borsten auch in axialer Richtung der Bürste, also in Strömungsrichtung des Abgases durch den Strömungskanal der Turbinen unterschiedlich lang ausgebildet sein. Allfällige Überlängen können von den Schaufelspitzen in einem Einschleifprozess abgeschliffen werden.

Die erfindungsgemässe Abgasturbine kann anstatt zum Antreiben eines Verdichters auch als Nutzturbine eingesetzt werden, etwa um einen Elektro-Generator oder eine mechanische Maschine anzutreiben.

### Bezugszeichenliste

- 10: Turbinenrad
- 11: Turbinenradnabe
- 12: Laufschaufeln des Turbinenrades
- 20: Düsenring
- 21: Innenwand des Düsenrings
- 22: Aussenwand des Düsenrings
- 23: Leitschaufeln des Düsenrings
- 31: Diffusor
- 41: Gasaustrittsgehäuse
- 42: Gaseintrittsgehäuse
- 51: Borsten der Bürste
- 52: Tragring der Bürste
- 53: Befestigungsmittel
- 6: Befestigungsmittel

## Patentansprüche

1. Abgasturbine, umfassend ein Turbinenrad (11) mit Laufschaufeln (12) und einem die Laufschaufeln radial umgebenden Abdeckring (5), **dadurch gekennzeichnet, dass** der Abdeckring als Bürste ausgebildet ist, und einen Tragring (52) sowie eine Vielzahl von Borsten (51) umfasst.

2. Abgasturbine nach Anspruch 1, wobei jede Borste (51) aus einem Draht besteht.

3. Abgasturbine nach Anspruch 1, wobei jede Borste (51) aus mehreren, zu einer Litze verdrillten Drähten besteht.

4. Abgasturbine nach einem der Ansprüche 1 bis 3, wobei die Borsten (51) unterschiedliche Längen aufweisen.

5. Abgasturbine nach einem der Ansprüche 1 bis 4, wobei die Borsten (51) bezüglich des Turbinenrades (11) in radialer Richtung ausgerichtet angeordnet sind.

6. Abgasturbine nach einem der Ansprüche 1 bis 4, wobei die Borsten (51) bezüglich des Turbinenrades (11) abweichend von der radialen Richtung ausgerichtet angeordnet sind.

7. Abgasturbolader, **gekennzeichnet durch** eine Abgasturbine gemäss einem der vorangehenden Ansprüche.
